# EUROPÄISCHE PATENTSCHRIFT

(11) **EP 1 864 741 B1**
(45) Veröffentlichungstag und Bekanntmachung des Hinweises auf die Patenterteilung: **21.10.2015**
(21) Anmeldenummer: 07008284.7
(22) Anmeldetag: 24.04.2007
(51) Int. Cl.: B23G 5/18, B23C 5/10, B23C 5/20

(54) **Werkzeug für die Bearbeitung eines Werkstücks**
Tool for machining a workpiece
Outil pour l'usinage d'une pièce

(30) Priorität: 09.06.2006 DE 102006027280
(43) Veröffentlichungstag der Anmeldung: 12.12.2007
(73) Patentinhaber: EMUGE-Werk Richard Glimpel GmbH & Co.KG Fabrik für Präzisionswerkzeuge, 91207 Lauf (DE)
(72) Erfinder: Glimpel, Helmut, 91207 Lauf (DE); Sperber, Mathias, 91244 Reichenschwand (DE)
(74) Vertreter: Schröer, Gernot H.

(56) Entgegenhaltungen:
- WO-A1-2005/080037
- WO-A1-2005/080038
- DE-A1- 3 831 046
- DE-T2- 69 511 289
- DE-U1- 9 201 113
- US-A1- 2003 210 961

## Beschreibung

Die Erfindung betrifft ein Werkzeug für die Bearbeitung eines Werkstücks.

Werkzeuge, welche einen Trägerkörper aufweisen, an dem ein oder mehrere Schneidelemente angeordnet sind, um mit dem Werkzeug ein Werkstück bearbeiten zu können, werden in vielfacher Weise in der Produktion und Fertigung von Werkstücken eingesetzt. Derartige Werkzeuge werden z. B. bei der spanabhebende Bearbeitung von Werkstücken, sei es zum Drehen, Fräsen, Gewindeschneiden oder anderweitig, eingesetzt. Die Schneidelemente sind dabei häufig als Schneidplatten oder auch Wendeschneidplatten ausgeführt. Um die Rüstzeiten von Werkzeugen und Werkzeugmaschinen, in denen die Werkzeuge eingesetzt werden, möglichst klein zu halten, ist es stets wünschenswert, dass ein Schneidelement schnell, sicher und möglichst positionsgenau an einem Trägerkörper befestigt werden kann. Für eine möglichst positionsgenaue Anordnung des Schneidelementes weist der Trägerkörper zumeist radiale Anlageflächen, Anlageflächen in Umfangsrichtung und axiale Anlageflächen für die einzelnen Schneidelemente auf.

Aus der DE 102 48 815 A1 ist beispielsweise ein Gewindefräs- oder-schneidwerkzeug mit einem um eine Rotationsachse drehbaren Trägerkörper und mindestens einem an dem Trägerkörper lösbar befestigbaren Schneidelement bekannt. Das Schneidelement wird bei diesem Werkzeug mit einem gesondert ausgeführten Befestigungselement an dem Trägerkörper angeordnet, wobei das Schneidelement zwischen dem Trägerkörper und dem Befestigungselement geklemmt wird. Zur Befestigung des Schneidelementes an dem Trägerkörper wird das Befestigungselement mit dem Trägerkörper verschraubt.

In der US 5,873,684 ist ein eine Längsachse aufweisendes Fräswerkzeug beschrieben, welches einen Werkzeughalter umfasst, an dem mehrere Schneidplatten angeordnet werden können. Hierzu weist der Werkzeughalter mehrere Einschuböffnungen auf. In jede Einschuböffnung kann jeweils eine Schneidplatte eingeführt werden kann. Sowohl jede Einschuböffnung als auch jede Schneidplatte weisen jeweils eine Nut auf. Wird eine Schneidplatte lagerichtig in die Einschuböffnung eingeführt, so dass sie an einer Endfläche der Einschuböffnung anliegt, sind die Nut der Schneidplatte und die in Richtung der Längsachse verlaufende Nut in der Einschuböffnung des Werkzeughalters derart zueinander ausgerichtet, dass ein länglicher, zylinderförmiger Stift in die Nut des Werkzeughalters und der Schneidplatte eingeführt werden kann, wodurch sich eine erste Fixierung der Schneidplatte in der Einschuböffnung des Werkzeughalters ergibt. Zur Befestigung der Schneidplatte in der Einschuböffnung werden Schrauben verwendet, welche mit dem in die Nut eingeführten länglichen Stift zusammenwirken und die Schneidplatte schließlich in der Einschuböffnung fixieren.

Als nachteilig erweist sich in diesen Fällen, dass zur Positionierung und Fixierung eines Schneidelementes an einem Trägerkörper zusätzliche Elemente, sei es ein Befestigungselement oder ein Stift, verwendet werden müssen.

Die WO 2005/080037 A1 offenbart einen Nutfräser mit den Merkmalen des Oberbegriffs des Anspruchs 1, der eine Wendeschneidplatte mit zwei Befestigungsseiten aufweist, an denen jeweils mehrere Rillen vorgesehen sind, die mit entsprechenden Rillen auf einem entsprechenden Aufnahmesitz eines Trägerkörpers des Nutfräsers in Eingriff gebracht werden. Das Schneidelement weist an zwei Schmalseiten radial zu einer Längsrichtung des Schneidelements, die der Drehachse des Nutfräsers entspricht, sich axial erstreckende Zahnreihen zum Fräsen eines Gewindes auf. Der Aufnahmesitz am Trägerkörper ist als zentraler Schlitz in einem schaftähnlichen Trägerkörper ausgebildet, in dem das plattenförmige Schneidelement eingesetzt ist. Dabei stehen dann an beiden Seiten des Schlitzes radial zur Achse die beiden Zahnreihen nach außen über den Außendurchmesser des Schaftes hinaus. Somit ist dieses Werkzeug nur zur Innenbearbeitung eines Werkstücks zur Erzeugung eines Innengewindes in einem Werkstück geeignet und nicht zur Außenbearbeitung eines Werkstücks zum Erzeugen eines Außengewindes.

Die DE 38 31 046 A1 offenbart einen Hohlfräser zur Herstellung von kreisrunden Ausnehmungen mit stufenlos veränderlichem Durchmesser im Vollmaterial, wobei der Hohlfräser an einem Zylindermantel eine Vielzahl von Schneidelementen aufweist, die Stirnschneiden und Flankenschneiden aufweisen und beidseitig mit dem Abstand zu ihren Stirnschneiden angeordnet und radial nach innen und radial nach außen gerichtete Schneidzähne zum gleichzeitigen Schneiden sowohl eines Innengewindes als auch eines Außengewindes versehen sind, wobei die äußere Ansenkschneide doppelseitig schneidend ausgebildet sein kann. Der Fräserschaft ist durch einen Zylindermantel gebildet und ist im Bereich seines freien Endes mit einer Anzahl axial gerichteter radialer Ausnehmungen versehen, in die nach Art einer prismenförmigen Aufnahme die Schneidelemente als austauschbare Elemente eingesetzt sind.

Der Erfindung liegt die Aufgabe zugrunde, ein neues Werkzeug für die Bearbeitung eines Werkstücks anzugeben.

Nach der Erfindung wird diese Aufgabe gelöst durch ein Werkzeug mit den Merkmalen des Patentanspruchs 1.

Besonders vorteilhafte Ausbildungsformen sind in den abbängigen Ansprüchen definiert.

Ein Ausführungsbeispiel der Erfindung und Beispiel, die des Verständnis der Erfindung erleichtern, sind in den beigefügten schematischen Zeichnungen dargestellt. Es zeigen
- FIG 1: in einer perspektivischen Darstellung ein nicht erfindungsgemäßes Werkzeug in Form eines Gewindefräsers mit Schneidelementen,
- FIG 2: in einer vergrößerten Darstellung den Trägerkörper des Gewindefräsers aus FIG 1,
- FIG 3: der Gewindefräser aus FIG 1 in einer Seitenansicht,
- FIG 4: in einer perspektivischen Darstellung ein an dem Trägerkörper des Gewindefräsers aus FIG 1 befestigbares Schneidelement,
- FIG 5: die Vorderansicht des Schneidelementes aus FIG 4,
- FIG 6: in einer perspektivischen Darstellung ein Schneidelement aus FIG 1,
- FIG 7: die Vorderansicht des Schneidelementes aus FIG. 6,
- FIG 8: eine Ausführungsform eines erfindungsgemäßen Werkzeugs in Form eines Gewindefräsers, und
- FIG 9: verschiedene Profile am Beispiel von Schneidelementen.

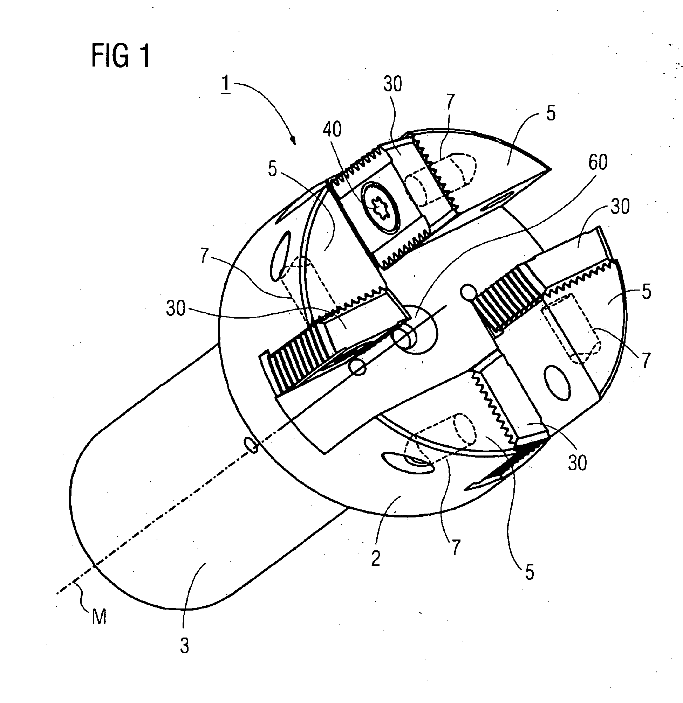

In FIG 1 ist ein nicht-erfindungsgemäßes Werkzeug 1 für die Bearbeitung eines nicht explizit dargestellten Werkstücks gezeigt, welches Werkzeug 1 einen wenigstens teilweisen, im Wesentlichen zylinderförmig ausgebildeten Trägerkörper 2 mit einem Schaft 3 umfasst. Im Falle des vorliegenden Ausführungsbeispiels handelt es sich bei dem Werkzeug 1 um ein Werkzeug zum Fräsen von Gewinden, wozu an dem Trägerkörper 2 im Falle des vorliegenden Ausführungsbeispiels Schneidelemente in Form von Schneidplatten bzw. Wendeschneidplatten 30 befestigt sind.

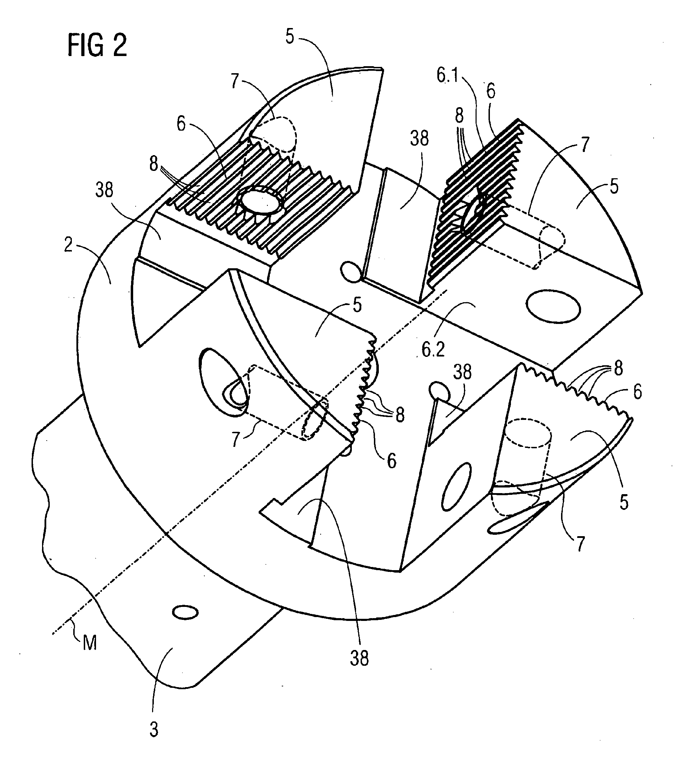

Der den Schaft 3 aufweisende im Wesentlichen zylinderförmige Trägerkörper 2 ist in FIG 2 ohne Wendeschneidplatten dargestellt. Wie sowohl aus FIG 1 als auch aus FIG 2 zu erkennen ist, weist der mit dem Schaft 3 versehene Trägerkörper 2 eine Mittelachse M auf, zu der der Trägerkörper 2 wenigstens teilweise, im Wesentlichen rotationssymmetrisch ausgebildet ist. Auf der dem Schaft 3 abgewandten Seite umfasst der Trägerkörper 2 im Falle des in den FIG 1 und 2 gezeigten Ausführungsbeispiels mehrere, vorliegend vier ringsegmentartig ausgebildete Abschnitte 5, von denen jeder Abschnitt 5 einen Aufnahmesitz 6 für ein Schneidelement aufweist. Die ringsegmentartigen Abschnitte 5 sind im Falle des vorliegenden Ausführungsbeispiels derart gleichförmig um die Mittelachse M des Trägerkörpers 2 angeordnet, dass der Trägerkörper 2 an sich sowie das Werkzeug 1 insgesamt wenigstens teilweise glockenartig ausgebildet ist und im Falle des vorliegenden Ausführungsbeispiels daher auch als Glockengewindefräser bezeichnet wird. Die glockenartige Ausbildung ergibt sich aber auch bei einer nicht gleichförmigen Anordnung der ringsegmentartigen Abschnitte um die Mittelachse.

Jeder ringsegmentartige Abschnitt 5 des Trägerkörpers 2 weist neben einer äußere und inneren Umfangsseite, welche innere Umfangsseite im Falle des vorliegenden Ausführungsbeispiels praktisch auf eine Linie reduziert ist, zwei Stirnseiten auf. In FIG 2 sind exemplarisch für alle ringsegmentartigen Abschnitte 5 an einem ringsegmentartigen Abschnitt 5 die beiden Stirnseiten mit den Bezugszeichen 6.1, 6.2 versehen. Eine der beiden Stirnseiten eines ringsegmentartigen Abschnitts stellt jeweils einen Aufnahmesitz für ein Schneidelement dar. Wie bereits erwähnt, sind die Aufnahmesitze der ringsegmentartigen Abschnitte 5 des vorliegenden Ausführungsbeispiels mit dem Bezugzeichen 6 gekennzeichnet. Die flächenartig ausgebildeten Aufnahmesitze 6 der ringsegmentartigen Abschnitte 5 sind in Falle des vorliegenden Ausführungsbeispiels im Wesentlichen parallel zu der Mittelachse M des Trägerkörpers 2 ausgerichtet. Zur möglichst einfachen und positionsgenauen Anordnung eines Schneidelementes auf einem Aufnahmesitz 6 weist jeder Aufnahmesitz 6 des Trägerkörpers 2 ein mehrere Rillen 8 umfassendes Profil auf. Im Falle des vorliegenden Ausführungsbeispiels verlaufen die Rillen 8 eines jeden Profils eines Aufnahmesitzes 6 im Wesentlichen geradlinig und parallel zu der Mittelachse M des Trägerkörpers 2 und sind V-förmig bzw. trapezförmig ausgebildet. Jeder Aufnahmesitz 6 weist also ein zahnförmiges Profil auf. Bei der Anordnung eines Schneidelementes auf einem Aufnahmesitz 6 wird das mehrere Rillen umfassende Profil des Aufnahmesitzes 6 mit einem entsprechenden mehrere Rillen umfassenden Gegenprofil eines noch näher zu beschreibenden Schneidelementes in Eingriff gebracht, so dass sich eine Verzahnung der Profile ergibt. Die Rillen des Profils eines Aufnahmesitzes 6 und die Rillen eines Profils eines Schneidelementes greifen dabei möglichst passgenau ineinander, so dass das Schneidelement in einfacher Weise auf dem Aufnahmesitz 6 positioniert werden kann. Die Befestigung eines Schneidelementes auf einem Aufnahmesitz 6 erfolgt lösbar. Im Falle des vorliegenden Ausführungsbeispiels wird ein Schneidelement auf einem Aufnahmesitz 6 mit einer Schraubenverbindung befestigt. Jeder ringsegmentartig ausgebildete Abschnitt 5 verfügt daher an seinem Aufnahmesitz 6 über ein vorzugsweise nicht zentrisch, sondern etwas exzentrisch zur Erzeugung einer Vorspannung für das Schneidelementes in dem Aufnahmesitz erzeugtes Gewindeloch 7, in das eine Schraube eingedreht werden kann.

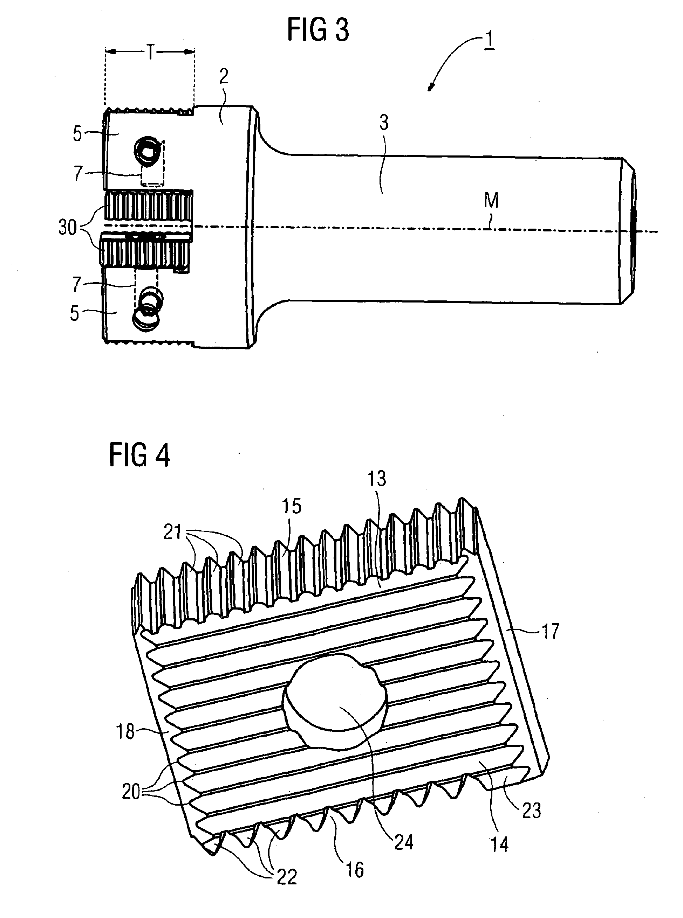

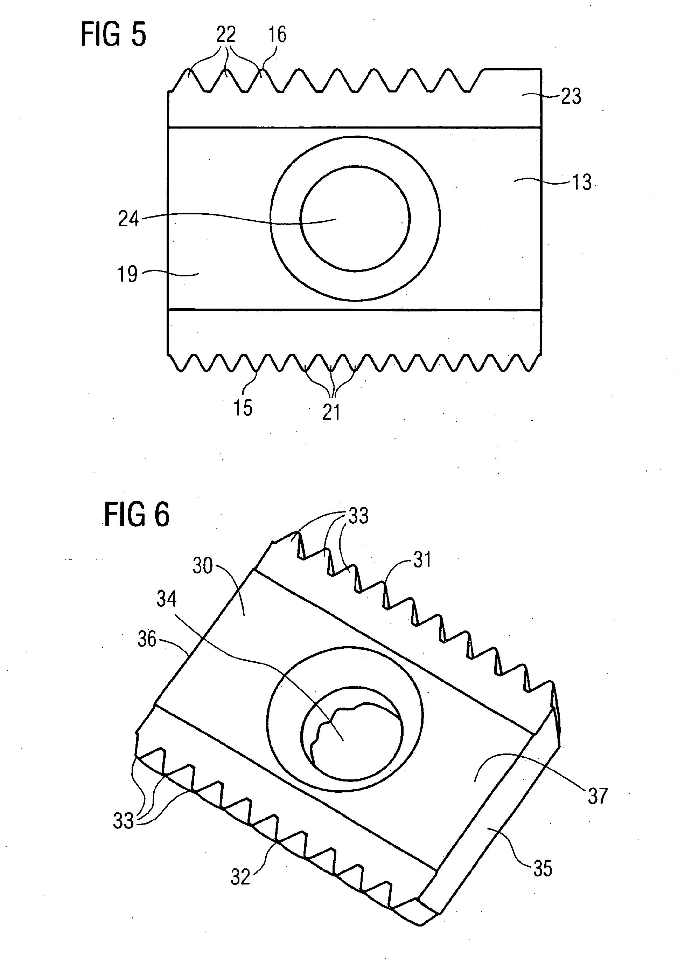

Ein für die Befestigung an einem Aufnahmesitz 6 des Trägerkörpers 2 geeignetes Schneidelement ist exemplarisch in FIG 4 dargestellt. Im Falle des vorliegenden Ausführungsbeispiels handelt es sich bei dem Schneidelement um eine Schneidplatte 13 mit zwei Schnittseiten 15, 16. Das Schneidelement muss aber nicht notwendigerweise als Schneidplatte 13 mit zwei Schnittseiten 15, 16 ausgebildet sein. Vielmehr sind auch einfache Schneidplatten mit nur einer Schnittseite an den Aufnahmesitzen 6 des Trägerkörpers anbringbar. Die Schneidplatte 13 ist zur spanabhebenden Bearbeitung eines Werkstücks vorgesehen und weist im Falle des vorliegenden Ausführungsbeispiels eine in FIG 4 gut zu erkennende Befestigungsseite 14, zwei im Wesentlichen ebene Seitenflächen 17 und 18 und eine Vorderseite 19 auf, welche in FIG 5 zu erkennen ist.

Wie bereits zuvor angedeutet weist die Befestigungsseite eines Schneidelementes, vorliegend die Befestigungsseite 14 der Schneidplatte 13 ein in zu den Aufnahmesitzen 6 des Trägerkörpers 2 entsprechender Weise ausgebildetes, jeweils mehrere Rillen 20 umfassendes Profil auf. Die Rillen 20 des Profils der Befestigungsseite 14 der Schneidplatte 13 verlaufen ebenfalls im Wesentlichen gradlinig und sind V-förmig bzw. trapezförmig ausgebildet. Bei einer Anordnung der Schneidplatte 13 mit ihrer Befestigungsseite 14 auf einem Aufnahmesitz 6 des Trägerkörpers 2 greifen demnach die die Rillen 8 bzw. 20 umfassenden Profile ineinander, das heißt, die V-förmigen bzw. trapezförmigen Erhöhungen des einen Profils greifen in die V-förmigen bzw. trapezförmigen Vertiefungen des anderen Profils. Bei einer entsprechend genauen Herstellung der Profile der Aufnahmesitze 6 und der Profile der Befestigungsseiten 14 der Schneidplatten 13 erhält man allein basierend auf den Profilen bereits einen verhältnismäßig guten Sitz einer Schneidplatte 13 auf einem Aufnahmesitz 6 eines ringsegmentartig ausgebildeten Abschnitts 5 des Trägerkörpers 2.

Die in FIG 4 dargestellte Schneidplatte 13 ist im Falle des vorliegenden Ausführungsbeispiels, wie bereits angedeutet, zum Fräsen eines Gewindes in ein nicht dargestelltes Werkstück vorgesehen. Die Schneidplatte 13 weist auf ihren beiden Schnittseiten 15, 16 Schnittzähne 21, 22 für das Fräsen eines Gewindes auf, wobei die Schnittzähne 21, 22 einer jeden Schnittseite 15, 16 jeweils im Wesentlichen gleichförmig ausgebildet sind, sich die Schnittzähne 21, 22 der beiden Schnittseiten 15, 16 hinsichtlich ihrer Anzahl und Abmessung aber unterscheiden, so dass mit der Schneidplatte 13 Gewinde unterschiedlicher Gewindesteigungen herstellbar sind. Auf der Schnittseite 15 sind mehr, hinsichtlich ihrer Abmessungen aber kleinere Schnittzähne 21 als auf der Schnittseite 16 angeordnet. Des weiteren weist die Schnittseite 16 an einem Ende einen Schnittbereich 23 ohne Schnittzähne auf, welcher Schnittbereich 23 beim Fräsen eines Gewindes dazu dient, einen unvollständig erzeugten Gewindegang bereits beim Fräsenvorgang des Gewindes zu entfernen.

Wie bereits erwähnt ist in FIG 5 die Vorderansicht der in FIG 4 dargestellten Schneidplatte 13 gezeigt, in der die Vorderseite 19 sowie die beiden Schnittseiten 15, 16 zu erkennen sind. Des weiteren ist aus den FIG 4 und 5 zu erkennen, dass die Schneidplatte 13 eine vorzugsweise zentrale Durchgangsbohrung 24 aufeist, die auf der Vorderseite angesenkt ist. Das Senkloch 24 ist vorhanden, um die Schneidplatte 13 nach einer Anordnung mit ihrer Befestigungsseite 14 auf einem Aufnahmesitz 6 des Trägerkörpers mit einer Senkschraube mit dem Trägerkörper 2 verschrauben, auf einer Anlagefläche 38 vorspannen und damit an dem Trägerkörpers 2 drehfest befestigen zu können.

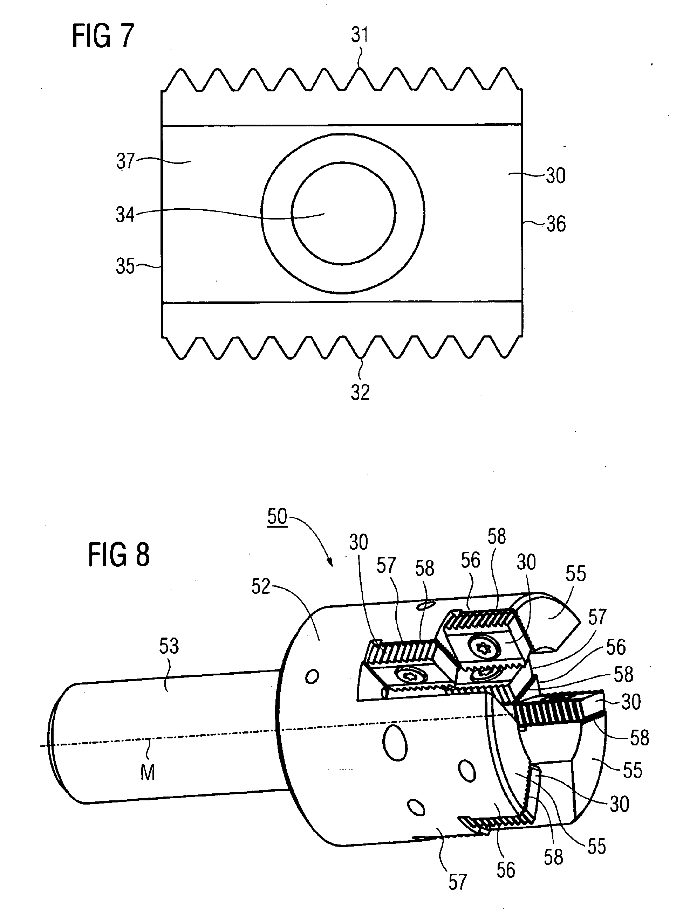

In den FIG 6 und 7 ist eine Ausführungsform eines Schneidelementes in Form einer Wendeschneidplatte 30 gezeigt, welche ebenfalls für die spanabhebende Bearbeitung eines Werkstücks, insbesondere für die Erzeugung eines Gewindes, vorgesehen ist. Die in der FIG 6 perspektivisch und in FIG 7 in einer Vorderansicht dargestellte Wendeschneidplatte 30 weist ebenfalls zwei Schnittseiten 31 und 32 auf. Im Falle der in den FIG 6 und 7 dargestellten Wendeschneidplatte 30 umfassen die beiden Schnittseiten 31, 32 jeweils Schnittzähne 33, die im Wesentlichen gleichförmig ausgebildet sind, so dass mit beiden Schnittseiten Gewinde der gleichen Gewindesteigung herstellbar sind. Des weiteren ist in den FIG 6 und 7 ein zentrisch vorhandenes Senkloch 34 zur Befestigung der Wendeschneidplatte 30 mittels einer Schraube an einem Aufnahmesitz 6 des Trägerkörpers 2 zu erkennen. In aus den FIG 6 und 7 nicht erkennbarer Weise verfügt auch die Wendeschneidplatte 30 auf ihrer der Vorderseite 37 gegenüberliegenden Befestigungsseite über ein jeweils mehrere V-förmig bzw. trapezförmig ausgebildete Rillen umfassendes Profil, welches mit einem mehrere V-förmige bzw. trapezförmige Rillen umfassenden Profil eines Aufnahmesitzes 6 des Trägerkörpers 2 zur möglichst positions- und passgenauen Anordnung der Wendeschneidplatte 30 auf einem Aufnahmesitz 6 des Trägerkörpers 2 zusammenwirkt, insbesondere greifen die Profile ineinander.

In FIG 1 ist im Übrigen exemplarisch die Anordnung mehrerer Wendeschneidplatten 30 auf den vier Aufnahmesitzen 6 des Trägerkörpers 2 veranschaulicht. Wie bereits erwähnt greifen die mehrere V-förmige bzw. trapezförmige Rillen aufweisenden Profile der Aufnahmesitze 6 des Trägerkörpers 2 und der Befestigungsseiten der Wendeschneidplatten 30 zum möglichst pass- und positionsgenauen Sitz der Wendeschneidplatten 30 ineinander. Jede der Wendeschneidplatten 30 wird mit einer Senkschraube 40 auf ihrem Aufnahmesitz 6 befestigt. Im Falle des vorliegenden Ausführungsbeispiels liegt dabei jeweils eine Seitenfläche einer Wendeschneidplatte 30 an einer axialen Anlagefläche 38 des Trägerkörpers 2 an. Die Anlage einer Wendeschneidplatte 30 an einer axialen Anlagefläche 38 ist vorliegend zweckmäßig, da die Rillen 8, 20 im Falle des vorliegenden Ausführungsbeispiels nur axial in Richtung der Mittelachse M des Trägerkörpers 2 verlaufen. Die Anlageflächen 38 dienen im Falle des vorliegenden Ausführungsbeispiels somit der axialen Positionierung der Schneidelemente.

Im Falle des in der FIG 1 dargestellten Werkzeugs zum Fräsen eines Gewindes sind die Schneidplatten 30 derart bemessen und das Profil jeweils derart in der Befestigungsseite einer Schneidplatte 30 eingebracht, dass eine Außenbearbeitung eines nicht explizit dargestellten Werkstücks möglich ist. Eine Schnittseite, beispielsweise die Schnittseite 32 der Wendeschneidplatte 30 ragt bei Befestigung einer Wendeschneidplatte 30 an einem Aufnahmesitz 6 über den inneren Umfang des jeweiligen ringsegmentartigen Abschnitts 5 hinaus und kann mit einem Werkstück in Eingriff gebracht werden. Zur Außenbearbeitung des Werkstückes werden das Werkzeug 1 und das Werkstück dabei derart relativ zueinander bewegt, dass sich das Werkstück in dem Innenraum des in Folge der ringsegmentartigen Abschnitte 5 glockenartige ausgebildeten Trägerkörpers 2 bzw. Werkzeugs 1 befindet. In FIG 3 ist im Übrigen in einer Seitenansicht des Werkzeugs 1 aus FIG 1 die Tiefe T des Innenraums zu erkennen, in dem das Werkstück angeordnet werden kann.

Wie der FIG 1 weiter entnommen werden kann, verlaufen die V-förmigen bzw. trapezförmigen Rillen 8, 20 der Profile der Aufnahmesitze 6 und der Befestigungsseiten der Wendeschneidplatten 30 im Wesentlichen parallel zu der Mittelachse M des Trägerkörpers 2 und im Wesentlichen senkrecht zu den Schnittzähnen der Wendeschneidplatten 30. Auch die Schnittseiten 31, 32 der an dem Trägerkörper 2 angeordneten Wendeschneidplatten 30 verlaufen im Wesentlichen parallel zur Mittelachse M des Trägerkörpers. Insgesamt ergibt sich also durch die beschriebene Ausbildung der V-förmigen bzw. trapezförmigen Rillen eine Verzahnung der Profile, die zu einem achsparallelen Sitz der Wendeschneidplatten 30 an dem Trägerkörper 2 führt.

Die Wendeschneidplatten 13 und 30 sind im Falle des vorliegenden Ausführungsbeispiels im Übrigen TiA1N (Titan-Aluminium-Stickstoff) beschichtet. Die Wendeschneidplatten können jedoch auch anders beschichtet sein.

Bei anderen Ausführungsformen von Schneidelementen können diese so bemessen sein und das mehrere Rillen umfassende Profil auf der Befestigungsseite derart in die Schneidelemente eingebracht sein, dass mit an den Aufnahmesitzen 6 des Trägerkörpers 2 angeordneten Schneidelementen nicht nur eine Außenbearbeitung, sondern auch ohne Wechsel oder Drehung der Scheidelemente eine Innenbearbeitung möglich ist. Hierzu muss die äußere Schnittseite eines Scheidelementes über den äußeren Umfang des Trägerkörpers 2 bzw. des jeweiligen ringsegmentartigen Abschnitts 5 und die innere Schnittseite des Schneidelementes über den inneren Umfang des jeweiligen ringsegmentartigen Abschnitts 5 hinausragen. Dies wird insbesondere durch die glockenartige Struktur des Trägerkörpers 2 ermöglicht.

Es besteht sogar die Möglichkeit bei einer entsprechenden Ausführung von Schneidelementen, den Trägerkörper 2 bzw. das Werkzeug 1 für eine stirnseitige Bearbeitung eines Werkstücks einzusetzen, also die Stirnseite des Werkzeugs 1 mit dem Werkstück in Eingriff zu bringen. Hierzu muss nur jeweils eine Schnittseite der Schneidelemente bei Anordnung an den Aufnahmesitzen 6 des Trägerkörpers 2 die Stirnseite des Trägerkörpers 2 überragen. Die Scheidelemente weisen dabei eine Schnittseite auf, welche für eine derartige stirnseitige Bearbeitung eines Werkstücks vorgesehen ist.

Durch den glockenartigen Aufbau des Trägerkörpers 2 ergibt sich eine kompakte kurze Bauform des Werkzeugs 1. Durch die Art der Anbringung der Schneidelemente an dem Trägerkörper 2 können Werkzeuge mit verhältnismäßig kleinem Werkzeugdurchmesser realisiert werden. Das Werkzeug kann um die Mittelachse M rotiert werden und/oder bei einer Anordnung in einer Werkzeugmaschine anderweitig relativ zu einem Werkstück bewegt werden.

In FIG 8 ist eine Ausführungsform eines erfindungsgemäßen Werkzeugs gezeigt, bei dem es sich ebenfalls um einen sogenannten Glockengewindefräser handelt. Das Werkzeug 50 unterscheidet sich von dem in FIG 1 gezeigten Werkzeug dahingehend, dass der zylinderförmige Trägerkörper 52 drei ringsegmentartig ausgebildete Abschnitte 55 aufweist, von denen jeder jeweils zwei Stufen 56 und 57 umfasst. Jede Stufe 56, 57 weist einen gleichartig ausgebildeten Aufnahmesitz 58 auf, wobei jeder Aufnahmesitz 58, wie bereits zuvor beschrieben, jeweils mit einem mehrere V-förmige bzw. trapezförmige Rillen umfassenden Profil versehen ist. Durch diese Ausführungsform eines Werkzeugs können Schneidelemente in Bezug auf die Mittelachse M des Werkzeugs 50 axial versetzt an dem Trägerkörper 50 für die Bearbeitung eines Werkstücks angeordnet werden. Die Anordnung und Befestigung von Schneidelementen, beispielsweise der Wendeschneidplatten 30 aus der FIG 6 und 7, erfolgt in der zuvor beschriebenen Art und Weise. Wie der Trägerkörper 2 ist auch der Trägerkörper 52 des Werkzeugs 50 mit einem Schaft 53 versehen. Trägerkörper 2, 52 und Schaft 3, 53 können dabei einstückig ausgeführt sein.

Der Schaft 3, 53 des Werkzeugs kann unterschiedlich ausgebildet sein. Der Schaft kann beispielsweise als Hohlschaftkegel (HSK), als Steilkegel (SK) oder als MasBT (= Steilkegel nach amerikanischer Norm) ausgeführt sein. Vorzugsweise weist der Trägerkörper 2, 52 außerdem wenigstens einen Kanal für die Zuführung von Kühlmittel zu den Schneidelementen auf. Eine derartiger Kanal ist in FIG 1 exemplarisch gezeigt und mit dem Bezugszeichen 60 versehen. Der Trägerkörper 2, 52 kann aber auch über noch weitere Kühlmittelkanäle verfügen. Beispielsweise kann es vorgesehen sein, dass zu jedem Schneidelement ein Kühlmittelkanal geführt ist.

Das erfindungsgemäße Werkzeug zeichnet sich zudem dadurch aus, dass bei an dem Trägerkörper befestigten Schneidelementen in vorteilhafter Weise ein ggf. auch mehrmaliger Nachschliff der Schneidkanten bzw. Schnittseiten in einfacher Weise möglich ist.

Das vorstehend beschriebene Ausführungsbeispiel der Erfindung ist im Übrigen nur exemplarisch zu verstehen. So muss es sich bei dem erfindungsgemäßen Werkzeug nicht notwendigerweise um ein Werkzeug für die Erzeugung eines Gewindes handeln. Vielmehr kann das Werkzeug auch für anderen Bearbeitungsvorgänge eines Werkstücks vorgesehen sein. In diesem Zusammenhang sind also auch die vorstehend beschriebenen Schneidelemente nur exemplarisch zu verstehen und können im Rahmen der Erfindung auch andersartig ausgeführt sein, um andere Bearbeitungsformen eines Werkstücks zu ermöglichen, sofern Aufnahmesitz des Trägerkörpers und die Befestigungsseite des Schneidelements mit jeweils mehreren Rillen umfassenden Profilen versehen sind.

Insbesondere ist es nicht notwendig, dass ein Schneidelement nur eine Befestigungsseite aufweist. Vielmehr kann ein Schneidelement auch noch eine zweite, der ersten gegenüberliegende Befestigungsseite aufweisen. Auch die zweite Befestigungsseite ist dabei mit einem mehrere Rillen umfassenden Profil versehen, so dass das Schneidelement mit beiden Befestigungsseiten an einem Aufnahmesitz eines Trägerkörpers angeordnet werden kann.

Auch die vorstehend beschriebene Ausführung der Rillen der Profile ist nur exemplarisch zu verstehen. So müssen die Rillen nicht geradlinig verlaufen. Des weiteren sind andere Rillenformen, z.B. trapezförmige Rillen etc. denkbar, solange die hierdurch realisierten Profile des Aufnahmesitzes und der Befestigungsseiten der Schneidelemente ineinander greifen können.

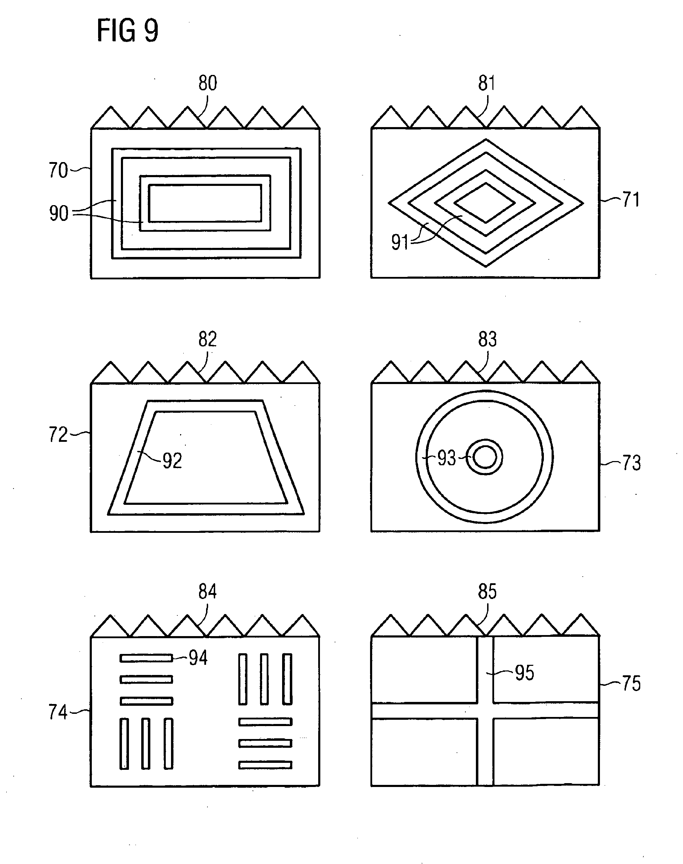

In FIG 9 sind exemplarisch und nicht abschließend an schematisch dargestellten Schneidelementen 70 bis 75, welche nur eine Schnittseite 80 bis 85 aufweisen, weitere durch Rillen 90 bis 95 erzeugbare Profile in einer Befestigungsseite gezeigt, die mit entsprechenden, in einem Aufnahmesitz erzeugten Gegenprofilen zusammen wirken können. Mögliche Profile können also beispielsweise rechteckförmig, rautenförmig, trapezförmig, kreisförmig, in verschiedene Richtungen verlaufende Rillen aufweisend oder kreuzförmig ausgebildet sein.

### Bezugszeichenliste

- 1: Werkzeug
- 2: Trägerkörper
- 3: Schaft
- 5: ringsegmentartig ausgebildeter Abschnitt
- 6: Aufnahmesitz
- 6.1, 6.2: Stirnseite
- 7: Gewindeloch
- 8: V-förmige bzw. trapezförmige Rillen
- 13: Wendeschneidplatte
- 14: Befestigungsseite
- 15, 16: Schnittseite
- 17, 18: Seitenflächen
- 19: Vorderseite
- 20: V-förmige bzw. trapezförmige Rillen
- 21, 22: Schnittzähne
- 23: Abschnitt ohne Schnittzähne
- 24: Senkloch
- 30: Wendeschneidplatte
- 31, 32: Schnittseiten
- 33: Schnittzähne
- 34: Senkloch
- 35, 36: Seitenflächen
- 37: Vorderseite
- 38: Anlagefläche
- 40: Senkschraube
- 50: Werkzeug
- 52: Trägerkörper
- 53: Schaft
- 55: ringsegmentartig ausgebildeter Abschnitt mit Stufe
- 56, 57: Stufe
- 58: Aufnahmesitz
- 60: Kühlmittelkanal
- 70-75: Schneidelemente
- 80-85: Schnittseite
- 90-95: Rillen

- M: Mittelachse
- T: Tiefe

## Patentansprüche

1. Werkzeug für die Bearbeitung eines Werkstücks aufweisend
a) einen Trägerkörper (52) mit Aufnahmesitzen (58) für Schneidelemente und
b) Schneidelemente (13, 30), von denen jedes wenigstens eine Befestigungsseite (14) aufweist, mit der das Schneidelement (13, 30) auf dem zugehörigen Aufnahmesitz (58) angeordnet werden kann, und welches zur Bearbeitung des Werkstücks mit dem Werkstück in Eingriff gebracht werden kann,
c) wobei jeder Aufnahmesitz (58) des Trägerkörpers (52) und die Befestigungsseite (14) des zugehörigen Schneidelementes (13, 30) ein jeweils mehrere Rillen umfassendes Profil aufweisen, welche Profile bei einer Anordnung des Schneidelementes (13, 30) mit der Befestigungsseite (14) auf dem Aufnahmesitz (58) ineinander greifen,
d) dadurch gekennzeichneit, dass der Trägerkörper (52) wenigstens zwei ringsegmentartig ausgebildeten Abschnitte (55) umfasst, von denen jeder wenigstens zwei Aufnahmesitze (58) für Schneidelemente (30) aufweist, dass jeder ringsegmentartig ausgebildeter Abschnitt (55) des Trägerkörpers (52) wenigstens zwei Stufen (56, 57) in Umfangsrichtung aufweist, und dass jede Stufe (56, 57) des ringsegmentartig ausgebildeten Abschnitts (55) des Trägerkörpers (52) jeweils einen Aufnahmesitz (58) für ein Schneidelement (30) aufweist, wodurch axial versetzt in Richtung der Mittelachse mehrere Schneidelemente an dem Trägerkörper angeordnet werden können.

2. Werkzeug nach Anspruch 1, bei dem die Rillen der jeweils mehrere Rillen umfassenden Profile der Aufnahmesitzen (58) des Trägerkörpers (52) und der Befestigungsseite (14) der Schneidelemente (13, 30) im Wesentlichen gleichartig ausgebildet sind oder ein im Wesentlichen gleiches Querschnittsprofil aufweisen und/oder
bei dem die Rillen der Profile der Aufnahmesitzen (58) des Trägerkörpers (52) und der Befestigungsseite (14) der Schneidelemente (13, 30) geradlinig verlaufen und/oder
bei dem die Rillen der Profile der Aufnahmesitzen (58) des Trägerkörpers (52) und der Befestigungsseite (14) der Schneidelemente (13, 30) im Wesentlichen V-förmig oder trapezförmig ausgebildet sind.

3. Werkzeug nach Anspruch 1 oder Anspruch 2, bei dem die Schneidelemente (13, 30) auf den Aufnahmesitzen (58) lösbar befestigbar sind und/oder bei dem die Schneidelemente (13, 30) eine durch die Befes tigungsseite (14) verlaufende Durchgangsöffnung (24, 34) aufweisen und/oder bei dem die Schneidelemente (13, 30) auf den Aufnahmesitzen (58) mit einer Schraubenverbindung befestigbar sind und/oder bei dem die Schneidelemente (13, 30) eine zweite der ersten gegenüberliegende Befestigungsseite aufweisen, die mit einem mehrere Rillen umfassenden Profil versehen ist, und/oder bei dem die Schneidelemente (13, 30) wenigstens eine Schnittseite (15, 16, 31, 32), vorzugsweise zwei oder mehr Schnittseiten (15, 16, 31, 32), aufweisen und/oder bei dem die Schneidelemente Wendeschneidelemente (30) sind.

4. Werkzeug nach Anspruch 3, bei dem wenigstens eine Schnittseite (15, 16, 31, 32) der Schneidelemente (13, 30) Schnittzähne (21, 22, 33) für die Erzeugung eines Gewindes aufweist, welche vorzugsweise gleichförmig ausgebildet sind und/oder bei dem die Schneidelemente (30) wenigstens zwei Schnittseiten (31, 32) umfassen, welche jeweils Schnittzähne (33) für die Erzeugung eines Gewindes aufweisen, wobei die Schnittzähne (33) auf beiden Schnittseiten (31, 32) vorzugsweise gleichförmig ausgebildet sind, und/oder bei dem die Schneidelemente (13) wenigstens zwei Schnittseiten (15, 16) umfassen, welche jeweils Schnittzähne (21, 22) für die Erzeugung eines Gewindes aufweisen, wobei die Schnittzähne (21, 22) einer jeden Schnittseite (15, 16) jeweils vorzugsweise gleichförmig ausgebildet sind, wobei sich die Schnittzähne (21, 22) der beiden Schnittseiten (15, 16) hinsichtlich ihrer Anzahl und Abmessungen unterscheiden, und/oder bei dem eine Schnittseite (16) der Schneidelemente (13) an einem Ende einen Schnittbereich (23) ohne Schnittzähne aufweist, der vorzugsweise zum Entfernen eines unvollständigen Gewindeganges vorgesehen ist.

5. Werkzeug nach einem der Ansprüche 1 bis 4, bei dem der Trägerkörper (52) wenigstens teilweise, im Wesentlichen zylinderförmig ausgebildet ist und eine Mittelachse (M) aufweist, um die der Trägerkörper drehbar ist, wobei vorzugsweise die Rillen des Profils des Aufnahmesitzes (58) des Trägerkörpers (52) im Wesentlichen parallel zu der Mittelachse (M) des Trägerkörpers (52) verlaufen.

6. Werkzeug nach einem der Ansprüche 1 bis 5,
wobei die ringsegmentartig ausgebildeten Abschnitte (55) im Wesentlichen gleichförmig oder nicht gleichförmig um die Mittelachse (M) des Trägerkörpers (52) angeordnet sind und/oder bei dem der Trägerkörper (52) wenigstens teilweise, wenigstens annährend glockenartig ausgebildet ist, und/oder wobei insbesondere Schneidelemente (13, 30) derart an den Aufnahmesitzen (58) der ringsegmentartig ausgebildeten Abschnitte (55) des Trägerkörpers (52) angeordnet werden können, dass eine Innen- und/oder Außenbearbeitung eines Werkstücks möglich ist, wobei eine Schnittseite (15, 16, 31, 32) eines Schneidelementes (13, 30) radial nach außen und/oder eine Schnittseite (15, 16, 31, 32) eines Schneidelementes (13, 30) radial nach innen ragt,
und/oder
bei dem ein Schneidelement (30) derart auf dem Aufnahmesitz (58) angeordnet ist, dass die Schnittseite (31,32) des Schneidelementes (30) wenigstens im Wesentlichen parallel zu der Mittelachse (M) des Trägerkörpers (52) verläuft.

7. Werkzeug nach einem der Ansprüche 1 bis 6, bei dem der Trägerkörper (52) wenigstens einen Kanal (60) für die Zuführung von Kühlmittel zu dem Schneidelement (13, 30) aufweist und/oder bei dem der Trägerkörper (52) einen Schaft (53) aufweist, wobei insbesondere der Trägerkörper (52) mit Schaft (53) einstückig ausgeführt ist.

8. Werkzeug nach einem der Ansprüche 1 bis 7, für die Bearbeitung wenigstens eines Werkstücks aufweisend
einen Trägerkörper (52) mit wenigstens zwei Schnittseiten (31, 32) umfassenden Schneidelemente (30), welche derart an dem Trägerkörper (52) angeordnet sind, dass mit der erste Schnittseite eine Innen- und/oder Außenbearbeitung eines Werkstücks und mit der zweiten Schnittseite eine Außenbearbeitung eines Werkstücks möglich ist.

9. Werkzeug nach Anspruch 8, bei dem die beiden Schnittseiten (31, 32) der Schneidelemente (30) einander gegenüberliegen und/oder bei dem die Schneidelemente (30) an Aufnahmesitzen (58) des Trägerkörpers (52) lösbar befestigtbar sind und/oder bei dem der Trägerkörper (52) wenigstens teilweise, im Wesentlichen zylinderförmig ausgebildet ist und eine Mittelachse (M) aufweist.

## Claims

1. Tool for machining a work piece, comprising
(a) a supporting body (52) with receiving seats (58) for accommodating cutting elements, and
(b) cutting elements (13, 30) whereof each includes at least one fastening side (14) by means of which said cutting element (13, 30) can be disposed on the associated receiving seat (58), and which can be engaged in said work piece for machining said work piece,
(c) wherein each receiving seat (58) of said supporting body (52) and said fastening side (14) of the appertaining cutting element (13, 30) present a respective profile including a plurality of grooves, which profiles are engaged in each other when said cutting element (13, 30) is disposed by said fastening side (14) on said receiving seat (58),
(d) **characterized in that** said supporting body (52) includes at least two sections (55) having a ring segment type configuration, whereof each presents at least two receiving seats (58) for accommodation of cutting elements (30), that each portion (55) having a ring segment type configuration of said supporting body (52) presents at least two steps (56, 57) along the peripheral direction, and that each step (56, 57) of said section (55) having a ring segment type configuration of said supporting body (52) includes a respective receiving seat (58) for accommodation of a cutting element (30), so that a plurality of cutting elements can be disposed on said supporting body with an axial offset in a direction towards the centre axis.

2. Tool according to Claim 1, wherein said grooves in said profiles presenting a respective plurality of grooves of said receiving seats (58) of said supporting body (52) and of said fastening side (14) of said cutting elements (13, 30) present a substantially similar configuration or a substantially equal cross-sectional profile,
and/or
wherein said grooves of the profiles of said receiving seats (58) of said supporting body (52) and said fastening side (14) of said cutting elements (13, 30) extend in a straight form, and/or
wherein said grooves of the profiles of said receiving seats (58) of said supporting body (52) and said fastening side (14) of said cutting elements (13, 30) are shaped in a substantially V-form or trapezoidal configuration.

3. Tool according to Claim 1 or Claim 2, wherein said cutting elements (13, 30) are adapted to be detachably fastened on said receiving seats (58) and/or
wherein said cutting elements (13, 30) are provided with a through-hole (24, 34) extending through said fastening side (14), and/or
wherein said cutting elements (13, 30) are adapted to be detachably fastened on said receiving seats (58) by means of a screw connection, and/or
wherein said cutting elements (13, 30) are provided with a second fastening side opposite to said first one, which is provided with a profile including a plurality of grooves,
and/or
wherein said cutting elements (13, 30) are provided with at least one cutting side (15, 16, 31, 32), preferably two or more cutting sides (15, 16, 31, 32), and/or
wherein said cutting elements are reversing cutting elements (30).

4. Tool according to Claim 3, wherein at least one cutting side (15, 16, 31, 32) of said cutting elements (13, 30) presents cutting teeth (21, 22, 33) for the production of a thread, which present preferably a uniform configuration, and/or
wherein said cutting elements (30) comprise at least two cutting sides (31, 32) which are each provided with respective cutting teeth (33) for the production of a thread, with said cutting teeth (33) being preferably provided with a uniform shape on both cutting sides (31, 32), and/or
wherein said cutting elements (13) comprise at least two cutting sides (15, 16) which are each provided with respective cutting teeth (33) for the production of a thread, with said cutting teeth (33) on each cutting side (15, 16) being preferably provided with a uniform shape whilst said cutting teeth (21, 22) of said two cutting sides (15, 16) are different in terms of their number and dimensions, and/or
wherein one cutting side (16) of said cutting elements (13) present, on one end, a cutting area (23) without cutting teeth, which is preferably provided for removal of an incomplete thread.

5. Tool according to any of the Claims 1 to 4, wherein said supporting body (52) presents, at least in parts, a substantially cylindrical configuration and is provided with a centre axis (M) about which said supporting body is rotatable, with said grooves of the profile of said receiving seat (58) of said supporting body (52) preferably extending substantially in parallel with said centre axis (M) of said supporting body (52).

6. Tool according to any of the Claims 1 to 5, wherein said sections (55) having a ring segment type configuration are disposed in a substantially uniform or non-uniform arrangement about said centre axis (M) of said supporting body (52), and/or
wherein said supporting body (52) is provided, at least in parts, with an at least approximately bell-shaped configuration, and/or
wherein cutting elements (13, 30) can be so disposed, n particular, on said receiving seats (58) of said sections (55) having a ring segment type configuration of said supporting body (52) that inside and/or outside machining of a work piece is possible, with one cutting side (15, 16, 31, 32) of a cutting element (13, 30) projecting radially to the outside and/or with one cutting side (15, 16, 31, 32) of a cutting element (13, 30) projecting radially to the inside,
and/or
wherein one cutting element (30) is so disposed on said receiving seat (58) that the cutting side (31, 32) of said cutting element (30) extends at least substantially in parallel with said centre axis (M) of said supporting body (52).

7. Tool according to any of the Claims 1 to 6, wherein said supporting body (52) is provided with at least one duct (60) for the supply of a cooling agent to said cutting element (13, 30), and/or
wherein said supporting body (52) presents a shaft (53, with said supporting body (52) being configured in one piece with said shaft (53) in particular.

8. Tool according to any of the Claims 1 to 7 for machining at least one work piece, comprising
a supporting body (52) with cutting elements (30) provided with at least two cutting sides (31, 32), which are so disposed on said supporting body (52) that the first cutting side permits inside and/or outside machining of a work piece whilst the second cutting side permits outside machining of a work piece.

9. Tool according to Claim 8, wherein said two cutting sides (31, 32) of said cutting elements (30) are opposite to each other and/or wherein said cutting elements (30) are adapted to bed detachably fastened on receiving seats (58) of said supporting body (52), and/or wherein said supporting body (52) presents, at least in parts, a substantially cylindrical configuration and is provided with a centre axis (M).

## Revendications

1. Outil pour l'usinage d'une pièce, comportant
a) un corps de support (52) avec des logements (58) pour des éléments de coupe, et
b) des éléments de coupe (13, 30), dont chacun comporte au moins une face de fixation (14), par laquelle l'élément de coupe (13, 30) peut être agencé sur le logement (58) correspondant, et lequel peut être amené en prise avec la pièce pour l'usinage de la pièce,
c) chaque logement (58) du corps de support (52) et la face de fixation (14) de l'élément de coupe (13, 30) correspondant ayant un profil comportant respectivement plusieurs cannelures, lesquels profils engrènent les uns dans les autres lorsque l'élément de coupe (13, 30) est disposé avec la face de fixation (14) sur le logement (58),
d) **caractérisé en ce que** le corps de support (52) comporte au moins deux portions (55) réalisés en forme de segments d'anneau, dont chacune comporte au moins deux logements (58) pour des éléments de coupe (30), **en ce que** chaque portion (55) en forme de segment d'anneau du corps de support (52) comporte au moins deux gradins (56, 57) dans le sens périphérique, et **en ce que** chaque gradin (56, 57) de la portion (55) en forme de segment d'anneau du corps de support (52) comporte respectivement un logement (58) pour un élément de coupe (30), moyennant quoi plusieurs éléments de coupe peuvent être disposés sur le corps de support en étant décalés axialement en direction de l'axe médian.

2. Outil selon la revendication 1, dans lequel les cannelures des profils, munis chacun de plusieurs cannelures, des logements (58) du corps de support (52) et de la face de fixation (14) des éléments de coupe (13, 30) sont réalisées sensiblement de manière similaire ou présentent une section transversale ayant sensiblement le même profil,
et/ou
dans lequel les cannelures des profils des logements (58) du corps de support (52) et de la face de fixation (14) des éléments de coupe (13, 30) sont droites,
et/ou
dans lequel les cannelures des profils des logements (58) du corps de support (52) et de la face de fixation (14) des éléments de coupe (13, 30) sont réalisées sensiblement en forme de V ou en forme de trapèze.

3. Outil selon la revendication 1 ou la revendication 2, dans lequel les éléments de coupe (13, 30) peuvent être fixés de manière amovible dans les logements (58), et/ou dans lequel les éléments de coupe (13, 30) comportent une ouverture débouchante (24, 34) traversant la face de fixation (14), et/ou dans lequel les éléments de coupe (13, 30) peuvent être fixés sur le logement (58) par un assemblage vissé, et/ou dans lequel les éléments de coupe (13, 30) comportent une deuxième face de fixation, qui est située en regard de la première et qui est munie d'un profil comportant plusieurs cannelures, et/ou dans lequel les éléments de coupe (13, 30) comportent au moins une face de coupe (15, 16, 31, 32), de préférence deux ou plusieurs faces de coupe (15, 16, 31, 32), et/ou dans lequel les éléments de coupe sont des éléments de coupe amovibles (30).

4. Outil selon la revendication 3, dans lequel au moins une face de coupe (15, 16, 31, 32) des éléments de coupe (13, 30) comporte des dents de coupe (21, 22, 33) pour réaliser un filetage, lesquelles, de préférence, sont réalisées de manière similaire, et/ou dans lequel les éléments de coupe (30) comportent au moins deux faces de coupe (31, 32) qui comportent chacune des dents de coupe (33) pour réaliser un filetage, les dents de coupe (33) sur les deux faces de coupe (31, 32) étant réalisées de préférence de manière similaire, et/ou dans lequel les éléments de coupe (13) comportent au moins deux faces de coupe (15, 16) qui comportent chacune des dents de coupe (21, 22) pour réaliser un filetage, les dents de coupe (21, 22) de chaque face de coupe (15, 16) étant réalisées, de préférence, respectivement de manière similaire, les dents de coupe (21, 22) des deux faces de coupe (15, 16) se différenciant par leur nombre et leurs dimensions, et/ou dans lequel une face de coupe (16) des éléments de coupe (13) comporte sur une extrémité une zone de coupe (23) sans dents de coupe, laquelle est prévue de préférence pour enlever un filet incomplet.

5. Outil selon l'une quelconque des revendications 1 à 4, dans lequel le corps de support (52) est réalisé, au moins en partie, avec une forme sensiblement cylindrique et comporte un axe médian (M) autour duquel le corps de support peut tourner, les cannelures du profil du logement (58) du corps de support (52) s'étendant, de préférence, sensiblement parallèlement à l'axe médian (M) du corps de support (52).

6. Outil selon l'une quelconque des revendications 1 à 5,
dans lequel les portions (55) réalisées en forme de segments d'anneau sont disposées sensiblement régulièrement ou non régulièrement autour de l'axe médian (M) du corps de support (52), et/ou dans lequel le corps de support (52) est réalisé, au moins en partie, au moins approximativement en forme de cloche, et/ou dans lequel en particulier des éléments de coupe (13, 30) peuvent être disposés contre les logements (58) des portions (55) en forme de segments d'anneau du corps de support (52), de telle sorte qu'un usinage intérieur et/ou extérieur d'une pièce est possible, une face de coupe (15, 16, 31, 32) d'un élément de coupe (13, 30) s'avançant radialement vers l'extérieur et/ou une face de coupe (15, 16, 31, 32) d'un élément de coupe (13, 30) s'avançant radialement vers l'intérieur,
et/ou
dans lequel un élément de coupe (30) est disposé sur le logement (58) de telle sorte que la face de coupe (31, 32) de l'élément de coupe (30) s'étend au moins sensiblement parallèlement à l'axe médian (M) du corps de support (52).

7. Outil selon l'une quelconque des revendications 1 à 6, dans lequel le corps de support (52) comporte au moins un canal (60) pour l'acheminement d'un fluide de refroidissement vers l'élément de coupe (13, 30) et/ou dans lequel le corps de support (52) comporte une tige (53), le corps de support (52) étant réalisé en particulier d'un seul tenant avec la tige (53).

8. Outil selon l'une quelconque des revendications 1 à 7, pour l'usinage d'au moins une pièce, comportant
un corps de support (52) avec des éléments de coupe (30), qui comportent au moins deux faces de coupe (31, 32) et qui sont disposés sur le corps de support (52) de telle sorte qu'un usinage intérieur et/ou extérieur d'une pièce est possible avec la première face de coupe et un usinage extérieur d'une pièce est possible avec la deuxième face de coupe.

9. Outil selon la revendication 8, dans lequel les deux faces de coupe (31, 32) des éléments de coupe (30) sont disposées face à face, et/ou dans lequel les éléments de coupe (30) peuvent être fixés de manière amovible sur des logements (58) du corps de support (52), et/ou dans lequel le corps de support (52) est réalisé, au moins en partie, avec une forme cylindrique et comporte un axe médian (M).
